# EUROPEAN PATENT SPECIFICATION

(11) **EP 1 793 636 B1**
(45) Date of publication and mention of the grant of the patent: **30.12.2009**
(21) Application number: 05791514.2
(22) Date of filing: 23.09.2005
(51) Int. Cl.: H04W 36/08

(54) **A METHOD FOR CONTROLLING USER TERMINAL SELECTING CELL IN A RADIO COMMUNICATION SYSTEM**
VERFAHREN ZUR STEUERUNG EINES BENUTZERENDGERÄTS, DAS EINE ZELLE IN EINEM FUNKKOMMUNIKATIONSSYSTEM AUSWÄHLT
PROCEDE POUR COMMANDER UN TERMINAL UTILISATEUR SELECTIONNANT UNE CELLULE DANS UN SYSTEME DE RADIOCOMMUNICATIONS

(30) Priority: 24.09.2004 CN 200410080199
(43) Date of publication of application: 06.06.2007
(73) Proprietor: Huawei Technologies Co., Ltd., Longgang District, Shenzhen Guangdong 518129 (CN)
(72) Inventor: Ding, Yingzhe, Shenzhen, Guangdong 518129 (CN)
(74) Representative: Kreuz, Georg Maria
(86) International application number: PCT/CN2005/001549
(87) International publication number: WO 2006/032215

(56) References cited:
- EP-A- 1 318 690
- EP-A- 1 372 350
- EP-A1- 1 318 690
- US-B1- 6 393 003
- US-B1- 6 546 251
- "Universal Mobile Telecommunications System (UMTS); User Equipment (UE) procedures in idle mode and procedures for cell reselection in connected mode (3GPP TS 25.304 version 6.2.0 Release 6); ETSI TS 125 304" ETSI STANDARDS, EUROPEAN TELECOMMUNICATIONS STANDARDS INSTITUTE, SOPHIA-ANTIPO, FR, vol. 3-R2, no. V620, June 2004 (2004-06), XP014016751 ISSN: 0000-0001
- NTT DOCOMO: "Frequency dispersion after MBMS reception" 3GPP TSG-RAN WG2 MEETING #43, XX, XX, 16 August 2004 (2004-08-16), pages 1-2, XP002377181 Prague
- LG ELECTRONICS: "Discussion on FLC and Cell Load. 3GPP TSG-RAN WG2 Meeting #43 (document No. R2-041538)" INTERNET CITATION, [Online] 20 August 2004 (2004-08-20), pages 1-2, XP007902975 Prague Retrieved from the Internet: URL:http://www.3gpp.org/ftp/tsg_ran/WG2_RL 2/TSGR2_43/Docs/R2-041538.zip> [retrieved on 2007-09-18]
- 3GPP: "3GPP TS 25.346 v6.2.0 (2004-09) 3rd Generation Partnership Project; Technical Specification Group Radio Access Network; Introduction of the Multimedia Broadcast Multicast Service (MBMS) in the Radio Access Network (RAN); Stage 2 (Release 6)" 3RD GENERATION PARTNERSHIP PROJECT (3GPP); TECHNICAL SPECIFICATION (TS), XX, XX, vol. 25.346, no. V620, 23 September 2004 (2004-09-23), pages 1-51, XP002421865

## Description

### Field of the Invention

The present invention relates to the technique of cell selection, and more particularly, to a method for controlling a user equipment (UE) to select a cell in a radio communication system.

### Background

Along with the development of the 3rd generation (3G) mobile communications, people's demand for mobile communications has gone beyond voice services. As 3G mobile communications can provide services of much higher data transmission rate than the 2nd generation mobile communications, a lot of multimedia services are appearing, e.g., video telephone, photograph downloading, high-rate browsing of Internet, etc. In some applications of these multimedia services, a plurality of users need to be provided with the same data at the same time, for instance, video on demand, TV broadcasting, video conference, network-based education, and interactive video games, etc.

In order to make an efficient use of resources of a mobile network, the 3G mobile communications has introduced the concepts of multicast and broadcast, which are techniques for transferring the data from one data source to multiple destinations. Specifically, the WCDMA/GSM global standardization organization, 3GPP, has put forward the Multimedia Broadcast/Multicast Service (MBMS), designed to provide point-to-multipoint services of transferring the data from one source to multiple users in the mobile networks so as to share network resources and improve the utility rate thereof, especially the utility rate of the resources of wireless interface. The MBMS defined by the 3GPP can implement not only low-rate text multicast and broadcast of messages, but also multicast and broadcast of the high-rate multimedia services.

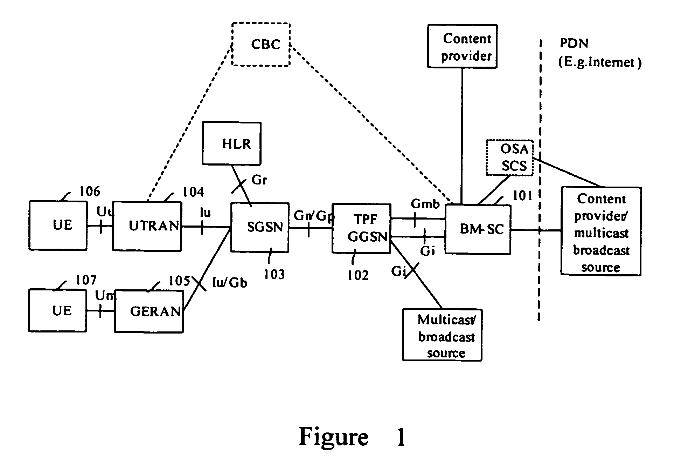

Figure 1 is a schematic diagram illustrating a radio network architecture supporting the multicast/broadcast services. As shown in Figure 1, in the present specifications of the 3GPP, the radio network entity supporting the broadcast/multicast services includes the Broadcast/Multicast Service Center (BM-SC) 101, which is connected with a TPF Gateway GPRS Support Node (GGSN) 102 via an interface Gmb or Gi, and one BM-SC 101 may be connected with multiple TPF GGSNs 102; the TPF GGSN 102 is connected with a Serving GPRS Support Node (SGSN) 103 via an interface Gn/Gp, and one GGSN 102 may be connected with multiple SGSNs 103; the SGSN 103 may be connected via an interface Iu with a UTRAN (UMTS Terrestrial Radio Access Network) 104, which is connected with a UE 106 via an interface Uu; the SGSN 103 may also be connected via an interface Iu/Gb with a GERAN (GSM Enhanced Radio Access Network) 105, which is connected with a UE 107 via an interface Um. The GGSN and SGSN are nodes within the core network (CN) of a radio network.

As shown by the network architecture illustrated in Figure 1, in order to support the MBMS, a mobile network functional entity - Broadcast Multicast-Service Center (BM-SC) is added to the 3G mobile network systems. The BM-SC is the entrance of content providers used for authorization and initiating an MBMS bearer in the mobile network as well as transferring the MBMS contents according to a pre-defined time plan. In addition, the functional entities, such as the UE, the UTRAN, the GERAN, the SGSN, and the GGSN are enhanced as well to incorporate relevant functions of MBMS.

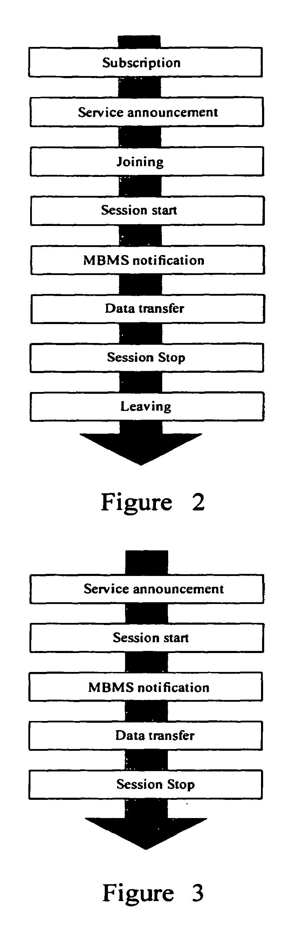

The MBMS incorporates a multicast mode and a broadcast mode. In the multicast mode, it is needed that a user subscribe to an appropriate multicast group, a service be activated, and appropriate charging information be generated. As there is difference between the multicast mode and the broadcast mode in the service demand, the service procedures thereof are different. As shown in Figure 2 and Figure 3, Figure 2 shows the flowchart of the MBMS multicast mode while Figure 3 shows the flowchart of the MBMS broadcast mode.

As shown in Figure 2, the processing involved in the MBMS multicast services includes: Subscription, Service announcement, Joining, Session Start, MBMS notification, Data transfer, Session Stop, and Leaving. Wherein, the Subscription procedure is used for the UE to subscribe in advance to the desired MBMS service. The Service announcement procedure is used for the BM-SC to announce the service that can be provided currently. The Joining procedure is the procedure of activating the MBMS multicast traffic. In the Joining procedure, the UE notifies the network that it is willing to be a member of the current multicast group and receives the multicast data of the corresponding traffic. The Joining procedure will create in the network and the UE that has joined the multicast group an MBMS UE context which records the information of the UE. In the Session Start procedure, the BM-SC gets prepared for the data transfer and instructs the network to set up the bearer resources in the appropriate CN and the access network. The MBMS notification procedure is used for notifying the UE that a multicast session of the MBMS is about to start. In the Data transfer procedure, the BM-SC transfers the data to the UE by means of the bearer resources set up in the Session Start procedure. There are two modes of the MBMS data transmission between the UTRAN and the UE: a point to multipoint (PTM) mode and a point to point (PTP) mode. In the PTM mode, the same data are sent out via the MBMS PTM traffic channel (MTCH), and may be received by all the UEs that have joined in the multicast service or are interested in the broadcast service. In the PTP mode, the data are sent via a dedicated traffic channel (DTCH), and can be received only by an appropriate UE. The Session Stop procedure is used for releasing the bearer resources set up in the Session Start procedure. The Leaving procedure makes the subscribers within the group leave the multicast group, i.e. the users will no longer receive the multicast data. This procedure will delete the appropriate MBMS UE context.

As shown in Figure 3, the processing involved in the MBMS broadcast service is similar to that of the MBMS multicast service, except that it is not needed to perform the Subscription procedure and the Joining procedure before the Session Start and no Leaving procedure is needed after the Session Stop.

In a mobile communication network, the moving of the UE will lead to changes in the network access point and the resident cell of the UE. In a WCDMA/GSM system, a change of the resident cell of the UE is typically implemented by the cell reselecting and the switching operation according to the different states of the UE. In order to ensure that the UE receives the MBMS service, the frequency layer convergence (FLC) mechanism is adopted in the prior art so that the network layer could control the UE receiving the multicast service how to select the cell. The so-called FLC refers to the procedure in which the UTRAN requests the UE to place, in the cell reselection, priority on the frequency layer which plan to transfer the MBMS service. The radio resource management (RRM) of a radio network controller (RNC) decides a preferred layer (PL) for each MBMS service. The PL of the same MBMS service may take different values in different part of a service area. On the same PL, every MBMS service has the same MBMS offset. From the time when the RNC receives the message of the Session Start from the interface Iu to the time when the RNC receives the message of the Session Stop, it is always possible for the UTRAN to indicate the FLC information on the MBMS PTM control channel (MCCH). The FLC information of the MBMS service includes: the service identity of the MBMS, the frequency information of the PL, and the MBMS offset.

The UE receiving a certain MBMS service will measure the signal quality of the serving cell and the adjacent cell, evaluate the signal quality of each cell using the MBMS offset, and select the cell with the best signal quality. The using of the MBMS offset means that the measurement of the signal quality of each cell will be carried out normally, but in the evaluation of the signal quality, the MBMS offset is added to the signal quality of the cell corresponding to the PL before making the comparison and selecting the cell with the best signal quality. In this way, the UEs receiving the certain MBMS service will be put together in the same frequency layer as many as possible so as to avoid transferring the MBMS service in every frequency layer. Wherein the MBMS offset is a rational number larger than zero, and the larger the offset, the higher the demand for the related UE to select the PL cell.

The above solution makes it possible to put together as many UEs receiving the certain MBMS service as possible in the same PL cell. However, if there are still many UEs remaining in the cell corresponding to the relevant PL after the MBMS session stops, the load of the PL cell will be increased, which may lead to the blocks on the PL and the degradation of the service quality. Moreover, since many UEs are put together on the PL cell, there are relatively fewer users in the cells of other frequency layers, leaving the radio resources of non-PL cells idle and less efficiently used.

Document EP 1 318 690 A1 discloses a call control method, wherein a paging message is transmitted from a first radio system to a user equipment (UE). The paging message comprises a command for the UE to start cell reselection to a cell of a second radio system. The UE starts reselection of the cell in the second radio system on the basis of the paging message.

Publication LG ELECTRONICS: "Discussion on FLC and Cell Load", 3GPP TSG-RAN WG2 Meeting #43, Prague, Czech Republic, R2-041538, 2004-08-20 discloses a method for cell reselection of a UE in order to reduce the load on a preferred frequency layer (PFL). When a MBMS session stops, UEs perform a cell reselection procedure over all candidate frequencies.

### Summary

The present invention provides a method for controlling a UE to select a cell in a radio communication system so as to disperse the UEs in a PL cell of the end of an MBMS session, reduce the load of the PL cell, improve the service quality, and prevent the UE from making frequent and unnecessary reselection of the cell.

### The solution in accordance with the present invention is as follows:

A method for controlling a UE to select a cell in a radio communication system, including the steps of:
receiving, by the UE, a cell reselection indication in a message indicating the end of an MBMS session from a network side;
determining, by the UE, whether to reselect a cell according to the cell reselection indication received from the network side.

If the cell reselection indication received from the network side requires the UE to reselect a cell, reselecting a cell.

The UE is in an idle mode, or in a Cell Paging Channel (CELL-PCH) state or in a UTRAN Registration Area _Paging Channel (URA-PCH) state. The network side issues more than one cell reselection indication to control the UEs in different connected modes or different connected states whether to reselect the cell respectively at the same time.

The UE reselects the cell using a preset MBMS offset.

The network is a GPRS network, or an EDGE network, or a WCDMA network, or a TD-SCDMA network.

The method further includes the steps of:
if the cell reselection indication received from the network side requires the UE to reselect a cell,
determining whether the UE is performing another MBMS session before the UE performs the step of reselecting the cell;
if the UE is performing another MBMS session, not reselecting a cell;
if the UE isn't performing another MBMS session, reselecting a cell.

The method further includes:
if the UE is performing another MBMS session, further determining whether the MBMS session, which the UE is performing, is in a same preferred frequency layer, PL, as the currently ended MBMS session before the UE performs the step of reselecting a cell;
if the MBMS session, which the UE is performing, is in the same PL as the currently ended MBMS session, not performing the step of reselecting the cell;
if the MBMS session, which the UE is performing, is in the same PL as the currently ended MBMS session, performing the step of reselecting the cell.

Performing the step of reselecting the cell includes:
performing the step of reselecting the cell immediately; or
not performing the step of reselecting the cell until the end of the MBMS session which the UE is performing.

The present invention discloses a UE, which is configured to perform the steps of the UE as listed above.

The present invention also discloses a communication network, which is configured to perform the steps of the network side as listed above.

In accordance with the method provided by the present invention for controlling a UE to select a cell in a radio communication system, when an MBMS session stops, the network side sends to the UE an indication on whether to reselect the cell so as to, on one hand, flexibly control whether the UE is to reselect the cell and prevent the UE from making frequent unnecessary cell reselection; on the other hand, to disperse as much as possible the UEs receiving the MBMS service in the PL corresponding to the MBMS service at the end of the MBMS session, and to reduce the load of the PL cell, avoiding the blocks in the PL cell and improving the service quality.

### Brief Description of the Drawings

Figure 1 is a schematic diagram illustrating the architecture of a radio network supporting an MBMS service;
Figure 2 is a flowchart illustrating a service of the MBMS multicast mode;
Figure 3 is a flowchart illustrating a service of the MBMS broadcast mode;
Figure 4 is a flowchart illustrating an operation of a UE supporting an MBMS service according to an embodiment of the present invention;
Figure 5 is a flowchart illustrating another operation of a UE supporting MBMS service according to another embodiment of the present invention.

### Detailed Description of the Embodiments

The core idea of the present invention is that, after an MBMS session stops, the network side sends a cell reselection indication so as to control the UE to disperse over different frequency layers and the UE decides whether to reselect the cell according to the received cell reselection indication to reselect the cell.

Considering the features of the MBMS services, for example, the time of the beginning of a session is predictable, it is usually the network side that decides whether to disperse the UEs to various frequency layers. If the dispersal is needed, the network side will send to the relevant UE the indication of making cell reselection at the end of the MBMS session, otherwise, send an indication of not making cell reselection. The cell reselection indication sent by the network side to the UE may be placed in the message indicating the end of a session or may be sent separately. The issuance of the cell reselection indication may be carried out by the RNC at the network side. The cell reselection indication may be a variable of Boolean type, with the value of True indicating that the network side requires the UE to reselect the cell and the value of False indicating the network does not require the UE to reselect the cell.

Then, the basic procedure for controlling a UE to select a cell in a radio communication system in accordance with the embodiment of the present invention includes: if the UE is required to reselect the cell according to the cell reselection indication issued by the network side after an MBMS service stops, it means that the network desires to disperse the UE to a cell corresponding to a different frequency layer and then the UE reselects the cell; otherwise, the UE does not reselect the cell.

In the solution of the embodiment, the procedure of the cell reselection may includes the steps of: the UE measures the signal quality of the cell in which the UE is currently located and the signal quality of the adjacent cells, then the UE compares the measured signal qualities of all the cells and selects the cell with the best signal quality to reside.

The procedure of the cell reselection may also make use of the method of setting the MBMS offsets, i.e., the network side sets appropriate MBMS offsets for the UEs of different categories according to the current connected modes and the connected states of the UEs, then each UE performs the cell reselection using the set MBMS offset, includes specifically: the UE measures the signal qualities of the cell in which the UE is currently located and the signal quality of the adjacent cells; then adds the MBMS offset of the UE to the signal quality measured in a PL cell to obtain the final signal quality of the PL cell; and eventually compares the signal qualities of all the relevant cells and selects a cell with the best signal quality to reside. Understandably, in the procedure mentioned above, it is also possible to subtract the appropriate MBMS offset from the signal qualities measured in all the non-PL cells, then the UE compares the signal quality measured in the PL cell with the signal qualities calculated for the non-PL cells, and selects the cell with the best signal quality to reside.

The connected mode and the connected state mentioned above are categorized like this: at present, the UEs are categorized into the idle mode and a Radio Resource Control(RRC) connected mode according to whether a connection with the RRC is set up, wherein the UE which hasn't set up the RRC connection with the UTRAN device is in the idle mode, under which the UE can only be differentiated through identities of Non Access Stratum (NAS), e.g. through IMSI; and the UE which has set up the RRC connection with the UTRAN device is in the RRC connected mode, under which the UE is assigned with a radio network temporary identity (RNTI) as the identifier of the UE in the public transmission channel.

The UEs in the RRC connected mode are further categorized into different states according to the layer of the RRC connection and the type of the transmission channel which the UE can use, where the UEs in the Cell Paging Channel(CELL_PCH) state, in the Cell Forward Access Channel (CELL_FACH) state, and in the Cell Dedicated Channel(CELL_DCH) state can be differentiated by the layers of the cell while the UEs in a UTRAN Registration Area _Paging Channel (URA_PCH) state can be differentiated by the layer of the UTRAN registration area (URA). The UEs in the CELL_DCH state are assigned with a dedicated physical channel and may use a dedicated transmission channel and a shared channel as well as the combination thereof; the UEs in the CELL_FACH state monitor a common transport channel (Forward Access Channel, FACH) continuously in downstream and are assigned to a default common channel (Random Access Channel, RACH) in upstream; and the UEs in the CELL_PCH and the URA_PCH states monitor a Paging Channel(PCH) through the associated Paging Indication Channel(PICH) channel by adopting the approach of discontinuous reception (DRX), while there are no upstream activities in these two states.

Based on the categories of the connected modes and the states mentioned above, the UEs may be classified in various ways in accordance with the embodiment, e.g., the UEs may be categorized into the UEs in the idle mode and the UEs in the connected mode; or the UEs in the idle mode, in the CELL_PCH state and in the URA_PCH state under the connected mode may be classified into one category while the UEs in the CELL_FACH state under the connected mode classified into another category.

In accordance with the embodiment of the present invention, the network side may send the indication requiring cell reselection to all or some of the UEs which are in the PL cell before the end of the session according to the need and the connected modes and the connected states in which the UE currently is. In this way, on one hand, it ensured that the concentrated UEs are dispersed after the end of the session; on the other hand, the UEs make frequent unnecessary switching between the cells is prevented. For instance, the network sends only to the UEs in the idle mode the indication whether to reselect the cell; or the network sends to the UEs in the idle mode and the UEs in the URA_PCH state and the CELL_PCH state under the connected mode the indication whether to reselect the cell. A plurality of indications may be sent down at the same time to the UEs in different connected modes or states to indicate, respectively, whether the UEs in different connected modes or states should reselect the cell, and these indications may be sent by being placed in one message or be sent respectively by being placed in a plurality of messages.

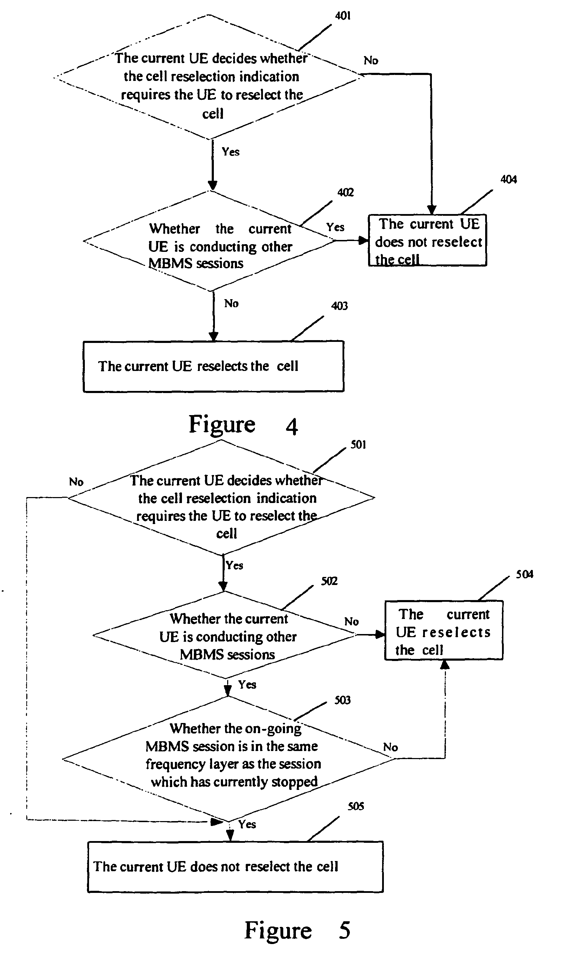

Based on the basic processing procedure in accordance with the embodiment of the present invention for controlling a UE to select a cell, whether the UE needs to reselect the cell can be further decided according to such factors as whether the UE is in other on-going multicast sessions, whether the other on-going multicast sessions are in the same PL as the session currently ended, etc., the specific procedures are as shown in Figure 4 and Figure 5, respectively.

As shown in Figure 4, in connection with each UE, the method of the embodiment of the present invention for controlling a UE to select a cell in a radio communication system includes the steps of:

Step 401: After an MBMS session stops, the UE receiving the MBMS service decides whether the cell reselection indication issued from the network side requires that the UE to reselect the cell, if yes, perform step 402; otherwise, perform step 404.

Step 402 - 403: The UE decides whether itself is in other on-going MBMS sessions, if yes, it means that the UE has joined a plurality of MBMS multicast services at the same time and there is an MBMS session which has not stopped, then perform step 404; otherwise, the UE makes cell reselection and the current procedure ends.

Likewise, the cell reselection here may be implemented in various ways, e.g., making cell reselection using the MBMS offsets of the new PL. The cell reselection may be made immediately, i.e., the UE continues with the on-going MBMS session while completing one switching of the cell, or the cell reselection is not made until the on-going MBMS session stops.

Step 404: The UE does not reselect the cell.

As shown in Figure 5, in connection with each UE, the method according to the embodiment of the present invention for controlling a UE to select a cell in a radio communication system includes the following steps:

Step 501: After an MBMS session stops, the UE receiving the MBMS service decides whether the cell reselection indication issued from the network side requires the UE to reselect the cell, if yes, perform step 502; otherwise, perform step 505.

Step 502: The UE decides whether itself is in other on-going MBMS sessions, if yes, it means that the UE has joined a plurality of MBMS multicast services at the same time and there is an MBMS session which has not stopped, then perform step 503; otherwise, perform step 504.

Step 503: The UE decides whether the on-going session is in the same frequency layer as the MBMS session currently ended, i.e., whether the PL is identical, if yes, perform step 505; otherwise, perform step 504.

Step 504: The UE makes cell reselection, and the current procedure ends.

Likewise, the cell reselection here may be implemented in various ways, e.g., making cell reselection using the MBMS offsets of the new PL; the cell reselection may be made immediately, i.e., the UE continues with the MBMS on-going session while completing one switching of the cell, or the cell reselection is not made until the on-going MBMS session stops.

Step 505: The UE does not reselect the cell.

The foregoing solutions are applicable to radio communication systems such as GPRS, EDGE, WCDMA, TD-SCDMA. The description mentioned above is only the preferred embodiments of the present invention and should not be construed as limiting the protection scope of this invention.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiments of the invention without departing substantially from principles of the invention.

## Claims

1. A method for controlling a User Equipment, UE, to select a cell in a radio communication system, **characterised by** the steps of:
receiving, by the UE, a cell reselection indication in a message indicating the end of an Multimedia Broadcast Multicast Service, MBMS, session from a network side;
determining, by the UE, whether to reselect a cell according to the cell reselection indication received from the network side.

2. The method according to Claim 1, wherein if the cell reselection indication received from the network side requires the UE to reselect a cell, reselecting a cell.

3. The method according to Claim 1, wherein the UE is in an idle mode, or in a CELL-PCH state or in a URA-PCH state.

4. The method according to Claim 3, wherein the network side issues more than one cell reselection indication to control UEs in different connected modes or different connected states whether to reselect the cell respectively at the same time.

5. The method according to Claim 1, wherein the UE reselects the cell using a preset MBMS offset.

6. The method according to Claim 1, wherein the network is a GPRS network, or an EDGE network, or a WCDMA network, or a TD-SCDMA network.

7. The method according to Claim 1, further comprising:
if the cell reselection indication received from the network side requires the UE to reselect a cell,
determining whether the UE is performing another MBMS session before the UE performs the step of reselecting the cell (402);
if the UE is performing another MBMS session, not preselecting a cell (404);
if the UE isn't performing another MBMS session, reselecting a cell (403).

8. The method according to Claim 7, further comprising:
if the UE is performing another MBMS session, further determining whether the MBMS session, which the UE is performing, is in a same preferred frequency layer, PL, as the currently ended MBMS session before the UE performs the step of reselecting a cell (503);
if the MBMS session, which the UE is performing, is in the same PL as the currently ended MBMS session, not performing the step of reselecting the cell (505);
if the MBMS session, which the UE is performing, is not in the same PL as the currently ended MBMS session, performing the step of reselecting the cell (504).

9. The method according to Claim 8, wherein performing the step of reselecting the cell comprises:
performing the step of reselecting the cell immediately; or
not performing the step of reselecting the cell until the end of the MBMS session which the UE is performing.

10. A User Equipment, UE, **characterised in that** the UE is configured to perform the steps of the UE according to any one of claims 1 to 8.

11. A communication network, **characterised in that** the communication network is configured to perform the steps of the network side according to any one of claims 1 to 8.

## Patentansprüche

1. Verfahren zum Steuern eines Benutzergeräts UE zur Auswahl einer Zelle in einem Funkkommunikationssystem, **gekennzeichnet durch** die folgenden Schritte:
das UE empfängt eine Zellenneuauswahl-Indikation in einer Nachricht, die das Ende einer Sitzung des Multimedia Broadcast Multicast Service MBMS anzeigt, von einer Netzseite;
das UE bestimmt gemäß der von der Netzseite empfangenen Zellenneuauswahl-Indikation, ob es eine Zelle neu auswählen soll.

2. Verfahren nach Anspruch 1, wobei, wenn die von der Netzseite empfangene Zellenneuauswahl-Indikation erfordert, dass das UE eine Zelle neu auswählt, eine Zelle neu ausgewählt wird.

3. Verfahren nach Anspruch 1, wobei sich das UE in einer Leerlaufbetriebsart oder in einem CELL-PCH-Zustand oder in einem URA-PCH-Zustand befindet.

4. Verfahren nach Anspruch 3, wobei die Netzseite jeweils zur selben Zeit mehr als eine Zellenneuauswahl-Indikation zur Steuerung von UE in verschiedenen verbundenen Betriebsarten oder verschiedenen verbundenen Zuständen, ob sie die Zelle neu auswählen sollen, ausgibt.

5. Verfahren nach Anspruch 1, wobei das UE die Zelle unter Verwendung eines voreingestellten MBMS-Offsets neu auswählt.

6. Verfahren nach Anspruch 1, wobei das Netz ein GPRS-Netz oder ein EDGE-Netz oder ein WCDMA-Netz oder ein TD-SCDMA-Netz ist.

7. Verfahren nach Anspruch 1, ferner mit den folgenden Schritten:
wenn die von der Netzseite empfangene Zellenneuauswahl-Indikation erfordert, dass das UE eine Zelle neu auswählt,
Bestimmen, ob das UE gerade eine andere MBMS-Sitzung ausführt, bevor das UE den Schritt des Neuauswählens der Zelle ausführt (402);
wenn das UE gerade eine andere MBMS-Sitzung ausführt, wird keine Zelle neu ausgewählt (404);
wenn das UE gerade keine andere MBMS-Sitzung ausführt, wird eine Zelle neu ausgewählt (403).

8. Verfahren nach Anspruch 7, ferner mit den folgenden Schritten:
wenn das UE gerade eine andere MBMS-Sitzung ausführt, wird ferner bestimmt, ob sich die MBMS-Sitzung, die das UE gerade ausführt, in derselben bevorzugten Frequenzschicht PL wie die gerade beendete MBMS-Sitzung befindet, bevor das UE den Schritt des Neuauswählens einer Zelle ausführt (503);
wenn sich die MBMS-Sitzung, die das UE gerade ausführt, in derselben PL wie die gerade beendete MBMS-Sitzung befindet, wird der Schritt des Neuauswählens der Zelle nicht ausführt (505);
wenn sich die MBMS-Sitzung, die das UE gerade ausführt, nicht in derselben PL wie die gerade beendete MBMS-Sitzung befindet, wird der Schritt des Neuauswählens der Zelle ausführt (504).

9. Verfahren nach Anspruch 8, wobei das Ausführen des Schritts des Neuauswählens der Zelle Folgendes umfasst:
sofortiges Ausführen des Schritts des Neuauswählens der Zelle; oder
Nichtausführen des Schritts des Neuauswählens der Zelle bis zum Ende der MBMS-Sitzung, die das UE gerade ausführt.

10. Benutzergerät UE, **dadurch gekennzeichnet, dass** das UE dafür ausgelegt ist, die Schritte des UE nach einem der Ansprüche 1 bis 8 auszuführen.

11. Kommunikationsnetz, **dadurch gekennzeichnet, dass** das Kommunikationsnetz dafür ausgelegt ist, die Schritte der Netzseite nach einem der Ansprüche 1 bis 8 auszuführen.

## Revendications

1. Procédé de commande d'un équipement d'utilisateur, UE, afin de sélectionner une cellule dans un système de radiocommunications, **caractérisé par** les étapes suivantes :
réception, par l'UE, d'une indication de resélection de cellule dans un message indiquant la fin d'une session de Service de Multidiffusion Multimédia, MBMS (Multimedia Broadcast Multicast Service), depuis un côté réseau ;
détermination, par l'UE, de ce qu'il convient ou non de resélectionner une cellule en fonction de l'indication de resélection de cellule reçue depuis le côté réseau.

2. Procédé selon la revendication 1, dans lequel, si l'indication de resélection de cellule reçue depuis le côté réseau exige que l'UE resélectionne une cellule, une cellule est resélectionnée.

3. Procédé selon la revendication 1, dans lequel l'UE est en mode de veille, ou dans un état CELL-PCH ou dans un état URA-PCH.

4. Procédé selon la revendication 3, dans lequel le côté réseau émet plus d'une indication de resélection de cellule afin de commander des UE dans différents modes connectés ou différents états connectés s'il convient que les UE resélectionnent respectivement la cellule simultanément.

5. Procédé selon la revendication 1, dans lequel l'UE resélectionne la cellule en utilisant un décalage MBMS préréglé.

6. Procédé selon la revendication 1, dans lequel le réseau est un réseau GPRS, ou un réseau EDGE, ou un réseau WCDMA, ou un réseau TD-SCDMA.

7. Procédé selon la revendication 1, comprenant en outre :
si l'indication de resélection de cellule reçue depuis le côté réseau exige que l'UE resélectionne une cellule,
la détermination de ce que l'UE exécute ou non une autre session MBMS avant que l'UE n'exécute l'étape de resélection de la cellule (402) ;
si l'UE exécute une autre session MBMS, la non-resélection d'une cellule (404) ;
si l'UE n'exécute pas une autre session MBMS, la resélection d'une cellule (403).

8. Procédé selon la revendication 7, comprenant en outre :
si l'UE exécute une autre session MBMS, la détermination supplémentaire de ce que la session MBMS qu'exécute l'UE se trouve ou non dans une même couche de fréquence préférée, PL, que la session MBMS qui vient de prendre fin avant que l'UE n'exécute l'étape de resélection d'une cellule (503) ;
si la session MBMS qu'exécute l'UE se trouve dans la même PL que la session MBMS qui vient de prendre fin, la non-exécution de l'étape de resélection de la cellule (505) ;
si la session MBMS qu'exécute l'UE ne se trouve pas dans la même PL que la session MBMS qui vient de prendre fin, l'exécution de l'étape de resélection de la cellule (504).

9. Procédé selon la revendication 8, dans lequel l'exécution de l'étape de resélection de la cellule comprend :
l'exécution de l'étape de resélection de la cellule immédiatement ; ou
la non-exécution de l'étape de resélection tant que la session MBMS qu'exécute l'UE n'a pas pris fin.

10. Equipement d'utilisateur, UE, **caractérisé en ce que** l'UE est configuré pour exécuter les étapes de l'UE selon l'une quelconque des revendications 1 à 8.

11. Réseau de communication, **caractérisé en ce que** le réseau de communication est configuré pour exécuter les étapes du côté réseau selon l'une quelconque des revendications 1 à 8.
